(19) Europäisches Patentamt
European Patent Office
Office européen des brevets

(11) **EP 1 030 161 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.⁷: $G01B\ 11/16$, $G01M\ 17/02$, $G06T\ 5/50$

(21) Anmeldenummer: **00103126.9**

(22) Anmeldetag: **16.02.2000**

(54) **Phasendifferenzbild mit Tiefpassfilterung und Grauwertverschiebung**

Phase difference image with low pass filtering and gray scale shifting

Image à différence de phase avec filtrage passe bas et déplacement des valeurs grises

(84) Benannte Vertragsstaaten:
**AT DE FR GB IT**

(30) Priorität: **18.02.1999 DE 19906681**

(43) Veröffentlichungstag der Anmeldung:
**23.08.2000 Patentblatt 2000/34**

(73) Patentinhaber: **Mähner, Bernward**
**82275 Emmering (DE)**

(72) Erfinder: **Mähner, Bernward**
**82275 Emmering (DE)**

(74) Vertreter: **Patentanwälte Rüger, Barthelt & Abel**
**Postfach 10 04 61**
**73704 Esslingen a. N. (DE)**

(56) Entgegenhaltungen:
**EP-A- 0 331 274          DE-A- 19 501 073**

**Beschreibung**

Die Erfindung betrifft ein Verfahren zur Ermittlung von Strukturmerkmalen, insbesondere Strukturdefekten, an Prüfobjekten mit diffus streuender Oberfläche.

Es ist bekannt, daß zur flächenhaften Bestimmung von Verschiebungen oder Dehnungen eines Prüfobjektes mit diffus streuender Oberfläche Streifenprojektionsverfahren, wie das Moiré-Verfahren, und interferometrische Verfahren, wie das ESPI- (Electronic Speckle Pattern Interferometry) oder das Shearing Verfahren eingesetzt werden können. Welches Verfahren für ein gegebenes Prüfobjekt angewendet werden kann, hängt von der gewünschten Ergebnisart und der geforderten Auflösung bzw. der Steifigkeit des Prüfobjektes im Verhältnis zur Größe der aufgebrachten Kräfte ab.

Bei den obengenannten Prüfverfahren werden bei statischer Prüfung üblicherweise zwei Zustände des Prüfobjektes verglichen, indem das Objekt in zwei unterschiedlichen Belastungszuständen aufgenommen wird und die Interferogramme der beiden Zustände subtrahiert werden. Hierdurch ergibt sich ein Differenzinterferogramm, welches je nach verwendetem Meßprinzip entweder die Verschiebung oder die Dehnung des Objektes zwischen den beiden Zuständen in Form von Interferenzlinien darstellt. Der Betrag der Verschiebung oder Dehnung an einem Bildpunkt des Differenzinterferogramms kann dann beispielsweise durch Abzählen der Interferenzlinien ausgehend von einem Bildpunkt mit bekannter Verschiebung oder Dehnung und unter Berücksichtigung der verwendeten Lichtwellenlänge bestimmt werden.

Wird der Meßkopf mit einer Phasenschiebeeinheit ausgerüstet, so kann eine erweiterte Auswertung nach dem Prinzip des Phasenshiftverfahrens durchgeführt werden (W.Osten, "Digitale Verarbeitung und Auswertung von Interferenzbildern", Kap. 6, Akademie Verlag ISBN 3-05-501294-1). Hierbei werden Phasenbilder erzeugt, welche jedem Bildpunkt einen bestimmten Phasenwinkel zuordnen. Werden die Phasenbilder von zwei Zuständen des Objektes subtrahiert, so erhält man ein Phasendifferenzbild. Im Gegensatz zum obengenannten Differenzinterferogramm zeigt das Phasendifferenzbild nicht sinusförmig modulierte Interferenzlinien, sondern direkt den Phasendifferenzwinkel zwischen zweitem und erstem Zustand. Ein weiterer Vorteil dieser Darstellung ist ferner, daß aufgrund der beim Phasenshiftverfahren angewendeten Rechenvorschrift der Phasenwinkel normiert wird, daß heißt, der in einem Phasenbild mit einem Phasenwinkel korrespondierende Grauwert ist unabhängig von der Bildkoordinate immer konstant. Nachteil des Phasenshiftverfahrens ist, daß während des Einzugs der für das Phasenshiftverfahren erforderlichen Bildsequenz das Prüfobjekt in absoluter Ruhe verharren muß.

Zur Vermeidung dieses Nachteils, ist ein Verfahren (s. h. Patentschrift DE 3843396 C1) entwickelt worden, welches unter der Bezeichnung "direkte Phasenmessung" oder "räumliches Phasenshiftverfahren" bekannt ist. Dieses Verfahren benötigt nur noch eine Gitterprojektion bzw. ein Kamerabild um $2\pi$ modulierte Phasenbilder zu berechnen.

Um dem Prüfer die Auswertung von Phasendifferenzbildern zu erleichtern, ist es sinnvoll, diese hierzu so aufzubereiten, daß die Fehlstellen für den Prüfer möglichst deutlich aufscheinen. Hierzu ist es insbesondere zweckmäßig die häufig vorhandenen Ganzkörperbewegungen oder sonstige nicht relevante globale Objektverformungen, die den lokalen Verformungen überlagert sind, zu eliminieren, um das Erkennen von lokalen Strukturmerkmalen insbesondere Strukturdefekten zu erleichtern.

Die Patentschrift DE 19501073 A1 "Bildverarbeitungsverfahren zur Ermittlung der Strukturfestigkeit eines Prüfobjektes mit diffus streuender Oberfläche" beschreibt ein Auswerteverfahren für Shearografie Phasenbilder, welches lokale Fehler für den Prüfer besonders deutlich sichtbar aufbereiten soll. Dabei wird das Phasendifferenzbild zunächst verstetigt, im Bildverarbeitungssystem um einen festen Betrag $\Delta X$ verschoben und nicht verschobenes und verschobenes Bild voneinander subtrahiert. Hierdurch wird im günstigsten Fall der Fehler mit der doppelten Amplitude dargestellt. Dieses Verfahren besitzt aber erhebliche Nachteile. So ist die Demodulation bzw. Verstetigung des Phasendifferenzbildes erforderlich. Bei der Demodulation wird für jeden Bildpunkt der zunächst unbekannte $2\pi$ Offset des ermittelten $2\pi$ modulierten Phasenwinkels rekonstruiert, indem die Umgebung auf gewisse Stetigkeitseigenschaften hin untersucht wird. Diese Vorgehensweise ist jedoch fehleranfällig, wobei sich ein einmal aufgetretener Demodulationsfehler bei der weiteren Demodulation in seiner Umgebung fortpflanzt. Ferner wird bei Fehlergrößen die sehr verschieden von $\Delta X$ sind, genau das Gegenteil von dem erreicht, was angestrebt ist, die Amplitudenverteilung innerhalb des Fehlers ist dann nämlich kleiner als vorher.

Ausgehend von diesem Stand der Technik ist es Aufgabe der Erfindung, ein Verfahren zur Ermittlung von Strukturmerkmalen an Prüfobjekten mit diffus streuender Oberfläche anzugeben, welches ein Ergebnisbild erzeugt, in dem die ursprünglich vorhandenen globalen Verformungen beseitigt sind und das somit dem Prüfer ein leichtes Erkennen von lokal begrenzten Strukturmerkmalen, insbesondere Strukturdefekten, im vermessenen Prüfobjekt ermöglicht.

Diese Aufgabe wird durch das in Patentanspruch 1 angegebene Verfahren gelöst. Vorteilhafte Weiterbildungen sind in den jeweiligen Unteransprüchen angegeben.

Erfindungsgemäß wird die Objektoberfläche des zu untersuchenden Objektes mit kohärentem oder strukturiertem Licht beleuchtet und mit einer Kamera beobachtet. Die Kamera ist vorzugsweise eine CCD Video Kamera. Zur Untersuchung der Struktureigenschaften des Prüfobjektes wird dieses verschiedenen Belastungen ausgesetzt. Die Belastung konnen Druck-, Zug-, Biege- oder anderweitige Belastungen sein. Die durch verschiedene Belastungen hervorgerufenen Verschiebungen oder Dehnungen der Objektoberfläche werden als interferometrisch oder durch das strukturierte Licht (z.B. Streifenmuster) erzeugte Intensitätsmodulation in den Abbildungen von dem zu vermessenden Objekt auf dem Bildsensor der Kamera erfaßt. Bei den Specklemeßtechniken wird beispielsweise die Verformung der Objektoberfläche als sinusförmige Intensitätsmodulation (sinusförmiger Intensitätsverlauf) der auf dem Bildsensor abgebildeten objektnahen Speckles registriert. Die auf dem Bildsensor der beobachtenden Kamera erzeugten Abbildungen werden zur Weiterverarbeitung einem Bildverarbeitungssystem zugeführt. Dieses ist vorzugsweise ein digitales Bildverarbeitungssystem. Aus den erzeugten und im Bildverarbeitungssystem abgelegten Abbildungen wird ein die Verschiebung oder den Spannungs-/ Dehnungszustand des Objektes darstellendes Phasendifferenzbild erzeugt. Das Phasendifferenzbild zeigt in jedem Punkt die Differenz zwischen dem Phasenwinkel eines des auf den Bildsensor auftreffenden Lichts in einem Belastungszustand und dem Phasenwinkel des auf den Bildsensor auftreffenden Lichts in einem anderen Belastungszustand. Zur Erzeugung des Phasendifferenzbildes kann beispielsweise ein Phasenshiftverfahren angewendet werden.

Erfindungsgemäß wird von dem Phasendifferenzbild eine Kopie erzeugt, die gegenüber dem ursprünglichen Phasendifferenzbild so manipuliert wird, daß die Strukturmerkmale beseitigt oder zumindest stark unterdrückt sind, und anschließend die manipulierte Kopie des Phasendifferenzbildes mit dem ursprünglichen Phasendifferenzbild verknüpft. Es entsteht durch Verwendung einer geeigneten Verknüpfung, vorzugsweise der Subtraktion der manipulierten Kopie des Phasendifferenzbildes vom ursprünglichen Phasendifferenzbild, ein resultierendes Phasendifferenzbild, bei dem globale Verformungen, Ganzkörperbewegungen oder Setzvorgänge eliminiert sind, wohingegen die im manipulierten Phasendifferenzbild eliminierten Strukturmerkmale im resultierenden Phasendifferenzbild ganz oder nahezu unverändert weiterbestehen. Gemäß einer vorteilhaften Weiterbildung der Erfindung wird zur Beseitigung der Strukturmerkmale im manipulierten Phasendifferenzbild ein Tiefpaßfilter angewendet, da sich typischerweise signifikante Strukturmerkmale insbesondere Strukturdefekte als lokale Extremwerte mit geringer flächiger Ausdehnung im Phasendifferenzbild zeigen. Zur Manipulation des Phasenbildes mittels eines Tiefpaßfilters wird dieses vorteilhafterweise zuvor in ein Sinus- und ein Cosinusbild zerlegt. Hierzu wird punktweise vom Phasenwert der Sinus- bzw. Cosinuswert berechnet und in einem Sinus-. bzw. Cosinusbild abgelegt. Durch diese Transformationen erhält man aus dem Phasenbild zwei sinusförmig modulierte Streifenbilder, die im Gegensatz zum Phasenbild keine Unstetigkeitsstellen in Form von Phasensprüngen aufweisen und somit für eine Tiefpaßfilterung geeignet sind. Nach der Tiefpaßfilterung kann sodann aus dem Sinus- und dem Cosinusbild unter Verwendung der Arcustangens Funktion erneut das Phasenbild berechnet werden.

Um die Strukturmerkmale im manipulierten Phasendifferenzbild zu eliminieren muß der Tiefpaß so stark gewählt werden, daß die größten zu erwartenden Merkmale noch weitestgehend beseitigt werden. Wird gemäß einer Ausführungsform der Erfindung eine Filtermatrix verwendet, so wird die Filtermatrix in etwa so groß wie das größte erwartete Strukturmerkmal gewählt. Bei einer üblichen Kameraauflösung, beispielsweise gemäß der CCIR Norm mit 768 x 576 Pixels, und einer maximalen Strukturmerkmalsgröße von 10% der Bildgröße beträgt die Größe der Filtermatrix somit etwa 76 x 76. Die Filterung mit einer solch großen Filtermatrix benötigt auch auf aktuellen Rechnersystemen erhebliche Zeit zumal die Filterung sowohl auf dem Sinus- als auch auf dem Cosinusbild durchgeführt wird. Gemäß einer weiteren Ausführungsform der Erfindung kann alternativ ein rekursives Tiefpaßfilter angewendet werden. Dieses Filter besitzt den Vorteil, daß unabhängig von der gewählten Filterstärke der gefilterte Wert eines Bildpunktes jeweils nur aus dem in Filterrichtung in der Vorgängerspalte und der Vorgängerzeile befindlichen Bildpunkt errechnet wird. Im Gegensatz zu den meisten anderen Filtern wird beim rekursiven Tiefpaß der gefilterte Wert ins Bild zurückgeschrieben und für den nächsten zu filternden Bildpunkt weiterverwendet (daher Bezeichnung "rekursiv"). Die Verknüpfung mit dem Bildpunkt der Vorgängerspalte bzw. der Vorgängerzeile erfolgt gemäß den folgenden Formeln:

Verknüpfung mit Vorgängerspalte:

$$I'(x,y) = (1 - k) \times I(x-1,y) + k \times I(x, y)$$

Verknüpfung mit Vorgängerzeile:

$$I'(x,y) = (1 - k) \times I(x,y-1) + k \times I(x, y)$$

Mit:

x: Spaltenkoordinate des Bildpunktes
y: Zeilenkoordinate des Bildpunktes
$I(x, y)$: ursprünglicher Intensitätswert am Bildpunkt $(x, y)$
$I'(x, y)$: gefilterter Intensitätswert am Bildpunkt $(x, y)$
$I(x-1,y)$: Intensitätswert des Bildpunktes in der in Filterrichtung vorhergehenden Spalte
$I(x,y-1)$: Intensitätswert des Bildpunktes in der in Filterrichtung vorhergehenden Zeile
k: Filterstärke (reelle Zahl im Intervall ]0..1[)

Wird der rekursive Tiefpaßfilter sehr stark eingestellt (d.h. k nahe 0), so wird das Bild zunehmend verfälscht, d.h. neben der erwünschten Tiefpaßwirkung wird das Bild auch geometrisch verzerrt. Um diese Effekte zu minimieren, wird gemäß einer vorteilhaften Ausführungsform dieses Filterverfahrens das Filter mit einer geringeren Stärke (d.h. größerem k) mehrmals angewendet und dabei die Filterung von unterschiedlichen Eckpunkten des zu filternden Bildes aus gestartet, damit sich die geometrischen Verzerrungen weitestgehend gegenseitig kompensieren.

Im Folgenden wird ein Ausführungsbeispiel der Erfindung anhand von Zeichnungen erläutert.

In den Zeichnungen zeigen:

Fig. 1 eine typische Prüfvorrichtung zur Ermittlung von Strukturdefekten mittels des Shearing Verfahrens

Fig. 2 die Verfahrensschritte anhand von Schnittlinienbildern

Fig. 3 ein mittels der in Fig. 1 gezeigten Prüfvorrichtung erzeugtes Phasendifferenzbild das lokale Strukturdefekte zeigt, denen eine globale Verformung überlagert ist.

Fig. 4 das in Fig. 3 gezeigte Phasendifferenzbild, das einer starken rekursiven Tiefpaßfilterung unterworfen wurde, um die lokalen Strukturdefekte zu beseitigen.

Fig. 5 das in Fig. 3 gezeigte Phasendifferenzbild von dem das in Fig. 4 gezeigte gefilterte Phasendifferenzbild subtrahiert wurde.

Fig. 6 das in Fig. 5 gezeigte Phasendifferenzbild nach der Verschiebung der Nullwinkellage auf einen mittleren Grauwert.

Fig. 7 ein mittels der in Fig. 1 gezeigten Prüfvorrichtung erzeugtes Phasendifferenzbild eines anderen Prüfobjekts, das lokale Strukturdefekte zeigt, denen eine globale Verformung überlagert ist.

Fig. 8 das in Fig. 7 gezeigte Phasendifferenzbild, das einer starken rekursiven Tiefpaßfilterung unterworfen wurde, um die lokalen Strukturdefekte zu beseitigen.

Fig. 9 das in Fig. 7 gezeigte Phasendifferenzbild, von dem das in Fig. 8 gezeigte gefilterte Phasendifferenzbild subtrahiert wurde, nach der Verschiebung der Nullwinkellage auf einen mittleren Grauwert.

Fig. 10 ein mittels der in Fig. 1 gezeigten Prüfvorrichtung erzeugtes Phasendifferenzbild eines weiteren Prüfobjekts, das lokale Strukturdefekte zeigt, denen eine globale Verformung überlagert ist.

Fig. 11 das in Fig. 10 gezeigte Phasendifferenzbild, das einer starken rekursiven Tiefpaßfilterung unterworfen wurde, um die lokalen Strukturdefekte zu beseitigen.

Fig. 12 das in Fig. 11 gezeigte Phasendifferenzbild, von dem das in Fig. 8 gezeigte gefilterte Phasendifferenzbild subtrahiert wurde, nach der Verschiebung der Nullwinkellage auf einen mittleren Grauwert.

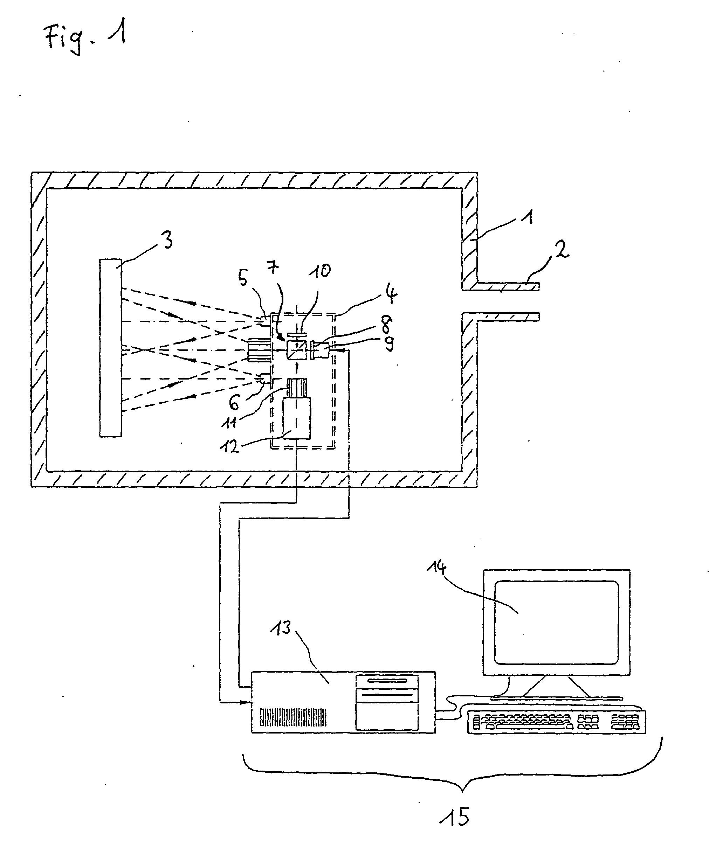

Die Figur 1 zeigt eine Versuchsanordnung zur Prüfung eines Bauteils 3 mittels Shearografie. Das Bauteil 3 wird durch Unterdruck geprüft, wobei eine Zustandsänderung des Bauteils 3 durch eine Druckänderung erfolgt. Hierzu befindet sich das Bauteil 3 zusammen mit dem Shearografie Meßkopf 4 in einer Unterdruckkammer 1 die über den Stutzen 2 evakuiert werden kann. Das Bauteil 3 wird mittels der Lichtquellen 5 und 6 mit kohärentem Licht beleuchtet. Das vom Bauteil 3 diffus zurückgestreute Licht wird in einem Michelson Interferometer 7 in zwei Teilstrahlungen aufgeteilt. Die beiden Spiegel 8 und 10 des Michelson Interferometers 7 sind so angeordnet, daß auf dem Bildsensor der Kamera 12 zwei gegeneinander versetzte Abbildungen des Bauteils 3 entstehen (Shearing Effekt). Der Spiegel 8 ist auf einem Piezo-Stellglied 9 befestigt, so daß ein Phasenshiftverfahren durchgeführt werden kann. Die Kamera 12 ist mit dem Bildverarbeitungssystem 15 bestehend aus einem Rechner mit Bildeinzugskarte 13 und einem Monitor 14 verbunden. Das Bildverarbeitungssystem übernimmt ferner die Ansteuerung des Piezo-Stellgliedes 9.

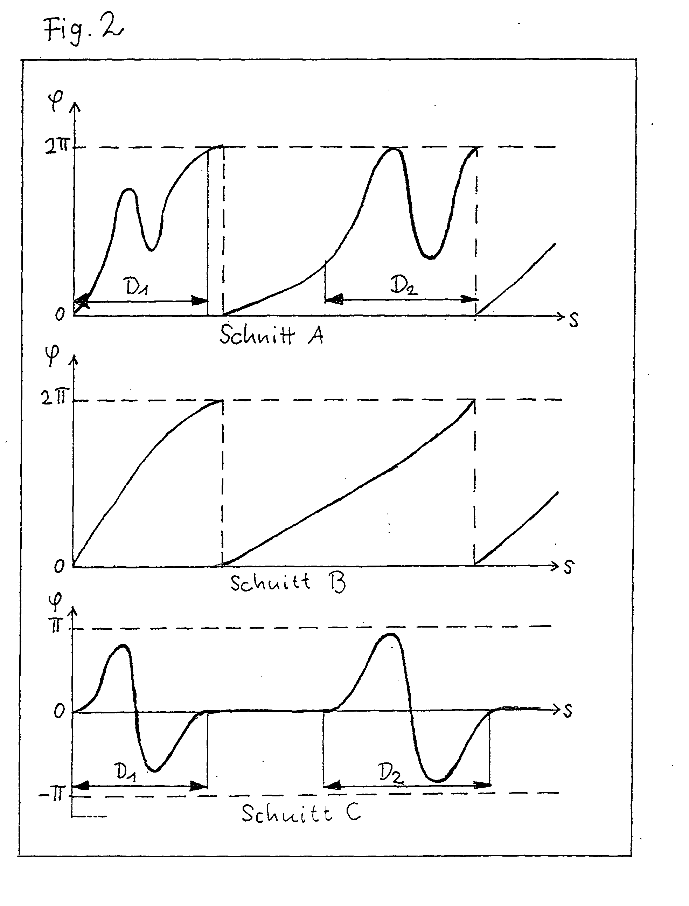

Die Figur 2 zeigt schematisch die einzelnen Verfahrensschritte anhand von Schnittlinienbildern bei denen die Intensität bzw. der Phasendifferenzwinkel über der Pixelkoordinate aufgetragen ist. Alle drei Schnittlinien laufen entlang denselben Bildkoordinaten und sind $2\pi$ moduliert. Schnittlinie A zeigt einen Schnitt durch das unbearbeitete Phasendifferenzbild welches mittels des Shearing Interferometers 4 erzeugt wurde. Es sind zwei lokale Strukturmerkmale D1 und D2 zu erkennen. Die Schnittlinie A weist ferner eine globale Verformung auf. Schnittlinie B zeigt einen Schnitt nachdem das Phasenbild tiefpaßgefiltert worden ist. Die lokalen Strukturmerkmale D1 und D2 sind durch die Tiefpaßfilterung beseitigt, es verbleibt die globale Verformung. Schnittlinie C schließlich zeigt eine Schnittlinie durch das resultierende Phasendifferenzbild, das durch Subtraktion des gefilterten Phasendifferenzbildes vom ursprünglichen Phasendifferenzbild erzeugt worden ist. Ferner ist der Nullpunkt durch Addition eines konstanten Grauwerts auf einen mittleren Grauwert verschoben, so daß das statt dem Intervall 0 bis $2\pi$ das Intervall von $-\pi$ bis $\pi$ mit kontinuierlich ansteigenden Grauwerten dargestellt wird.

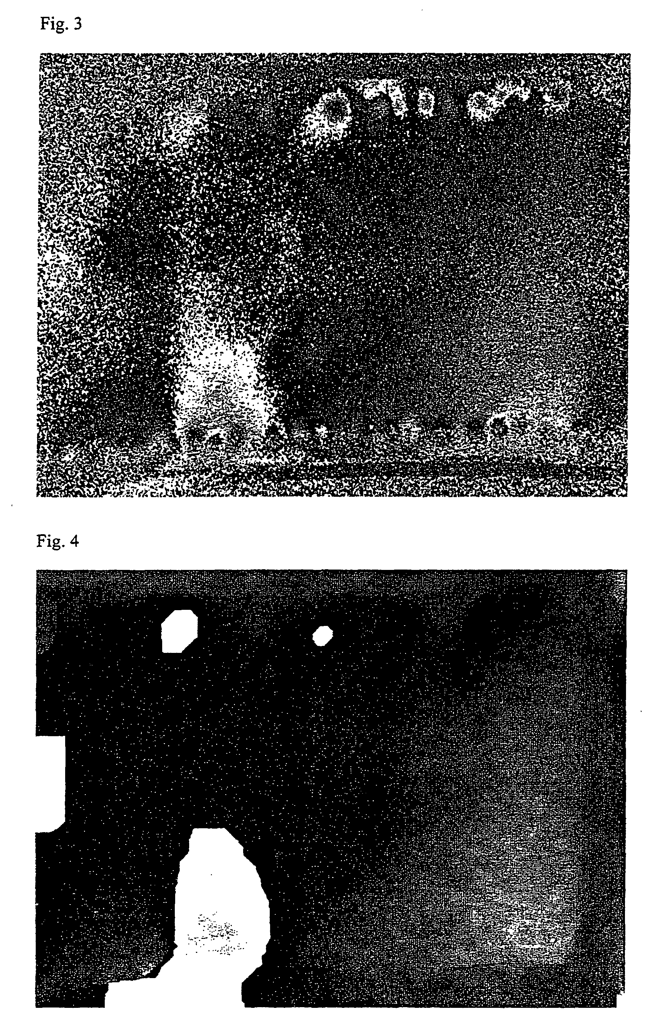

Die Figur 3 zeigt ein Phasendifferenzbild des Bauteils 3, wobei das Bauteil zu zwei unterschiedlichen Druckstufen aufgenommen wurde. Im oberen und unteren Bereich des Phasendifferenzbildes zeigen sich Strukturdefekte in Form von im Bauteil eingeschlossenen Materialtrennungen, welche durch den Unterdruck zu Ausbeulungen führen. Diesen Strukturfehlern überlagert ist eine globale Verwölbung des Bauteils, die durch einen Setzvorgang aufgrund der Druckänderung hervorgerufen wird. Diese globale Verformung erschwert das Erkennen der Strukturdefekte und insbesondere eine automatische Fehlererkennung z.B. mittels Schwellwertoperationen.

Die Figur 4 zeigt das Phasendifferenzbild aus Figur 3, das mittels einer starken rekursiven Tiefpaßfilterung manipuliert wurde. Durch die starke Filterung sind die lokalen Strukturdefekte des ursprünglichen Phasendifferenzbildes aus Figur 3 nicht mehr zu erkennen.

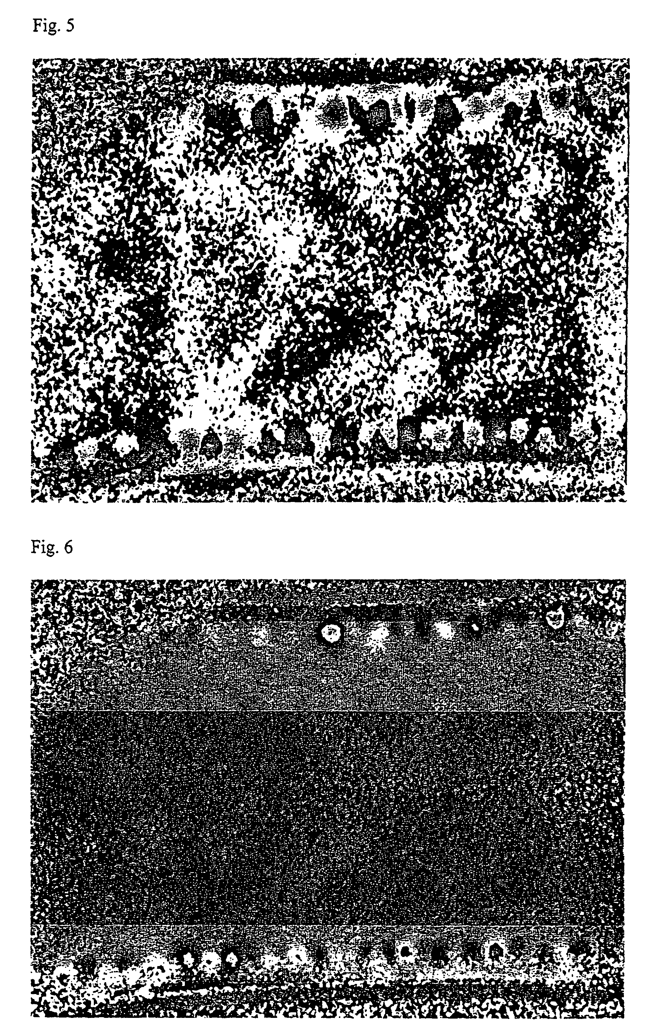

Figur 5 zeigt das Differenzbild zwischen dem Phasendifferenzbild aus Figur 3 und dem tiefpaßgefilterten Phasendifferenzbild aus Figur 4. Hierzu wurden punkteweise die Grauwerte des gefilterten Phasenbildes von denen des ursprünglichen Phasenbildes subtrahiert. Es ist deutlich zu erkennen, daß die im ursprünglichen Phasendifferenzbild sichtbare globale Verformung eliminiert ist, da außerhalb der Strukturdefekte nur noch geringe Schwankungen um die Nullwinkellage zu sehen sind. Kleine positive Abweichungen von Null werden dabei mit sehr dunklen, kleine negative Abweichungen von Null mit sehr hellen Grautönen dargestellt.

Figur 6 zeigt das resultierende Phasendifferenzbild aus Figur 5, wobei jedoch die Nullwinkellage auf den Mittelwert zwischen hellstem und dunkelstem darstellbaren Grauwert verschoben wurde, so daß die Flächen außerhalb der Strukturdefekte mit gleichmäßigen mittleren Grauwerten dargestellt werden. Diese Nullpunktsverschiebung hat zwar keinerlei Bedeutung für die Ergebniswerte bzw. Phasendifferenzen, verbessert aber den visuellen Eindruck ganz erheblich. Alle Strukturdefekte sind jetzt einwandfrei erkennbar.

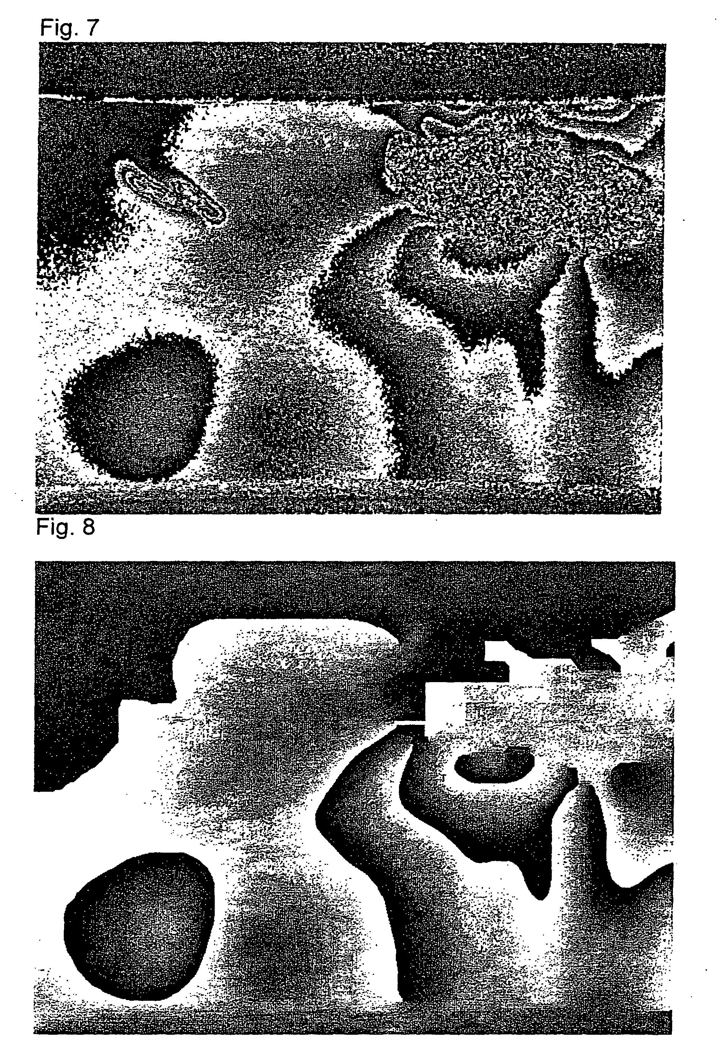

Ein weiteres Beispiel ist den Figuren 7 bis 9 entnehmen. Figur 7 veranschaulicht das mittels an sich bekannter Shearografie erhaltene Phasendifferenzbild, wobei das betreffende Bauteil unter zwei unterschiedlichen Druckstufen (Belastungen) aufgenommen wurde. Im oberen rechten und linken Bereich des Phasendifferenzbildes zeigen sich Strukturdefekte in Form von im Bauteil eingeschlossenen Materialtrennungen, welche durch den Unterdruck zu Ausbeulungen führen. Diesen Strukturfehlern überlagert ist eine globale Verwölbung des Bauteils, die durch einen Setzvorgang aufgrund der Druckänderung hervorgerufen wird. Diese globale Verformung erschwert das Erkennen der Strukturdefekte und insbesondere eine automatische Fehlererkennung z.B. mittels Schwellwertoperationen.

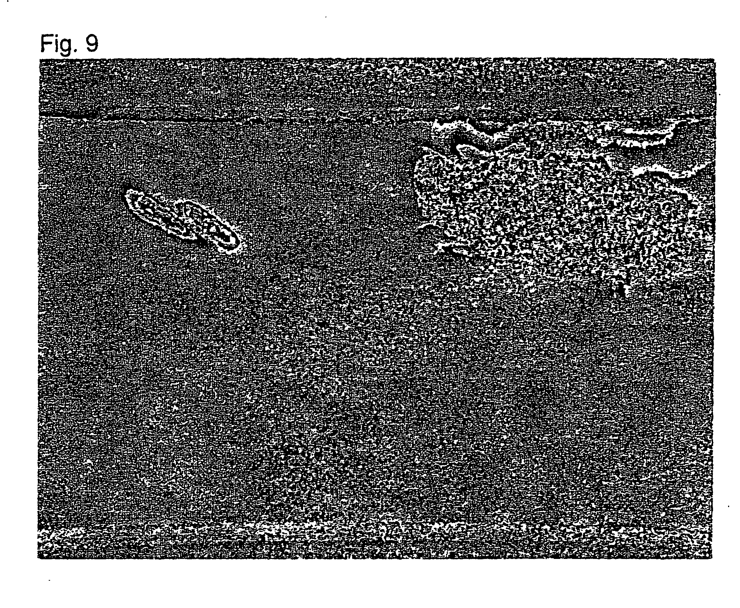

Die einzelnen Verfahrensschritte der weiteren Verarbeitung entsprechen den in Fig. 2 veranschaulichten Verfahrensschritten. Es wird mit dem Ergebnisbild nach Fig. 9 ein Bild erhalten, das die Gesamtverformung des Bauteils nicht darstellt und lokale Verformungen, die auf Fehler hindeuten, hervorhebt.

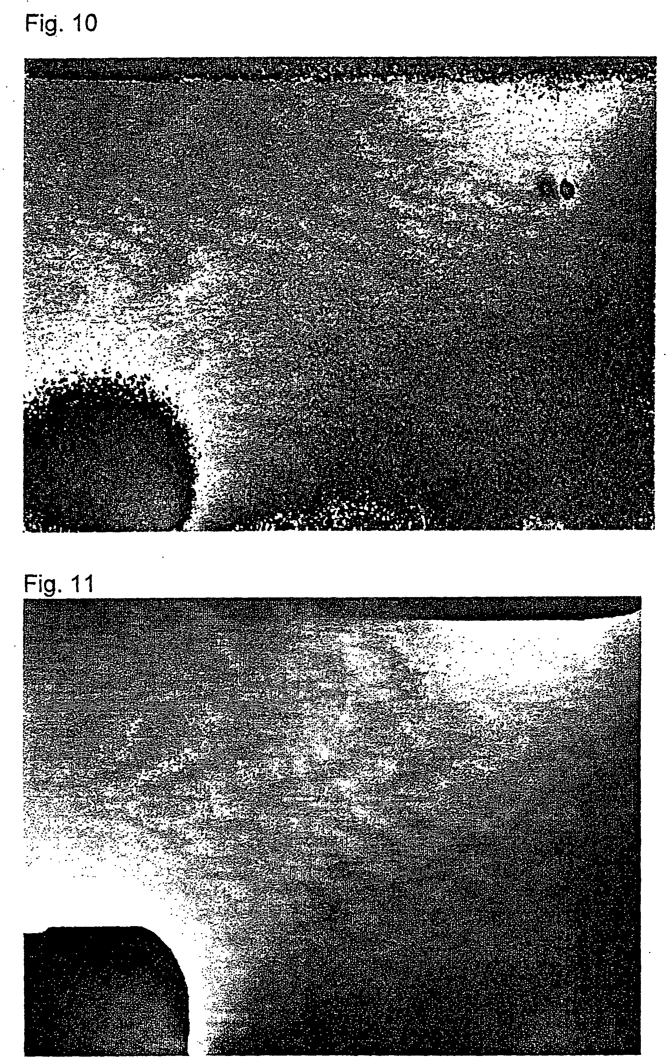

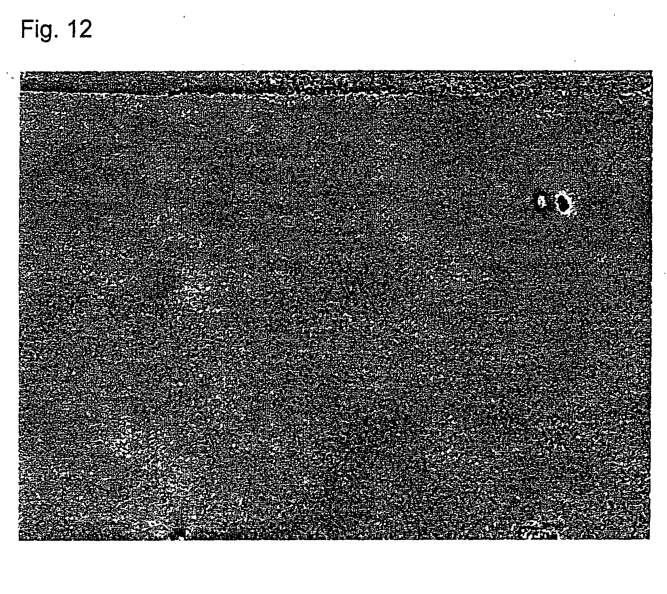

Ein weiteres Beispiel ist den Figuren 10 bis 12 zu entnehmen. Durch die vorgestellte Bildverarbeitung wird eine großräumige Verformung, die in dem Phasenbild nach Fig. 10 zu einem dominanten schwarzen Fleck unten links führt, ausgeblendet. Der Strukturdefekt oben rechts bleibt, wie Fig. 12 zeigt, jedoch erhalten und wird noch verstärkt.

**Patentansprüche**

1. Verfahren zur Ermittlung von Strukturmerkmalen an Prüfobjekten mit diffus streuender Oberfläche, bei dem

   - die Objektoberfläche mit kohärentem oder strukturiertem Licht beleuchtet wird,

   - das Prüfobjekt mit einer Kamera beobachtet wird,

   - das Prüfobjekt verschiedenen Belastungen ausgesetzt wird,

   - die durch verschiedene Belastungen hervorgerufenen Verschiebungen oder Dehnungen der Objektoberfläche als interferometrisch oder durch das strukturierte Licht erzeugte Intensitätsmodulation in den Abbildungen von dem zu vermessenden Objekt auf dem Bildsensor der Kamera erfaßt werden,

   - die auf dem Bildsensor erzeugten Abbildungen zur Weiterverarbeitung einem Bildverarbeitungssystem zugeführt werden

   - aus den erzeugten Abbildungen vom Bildverarbeitungssystem ein die Verschiebung oder den Spannungs-/ Dehnungszustand des Objektes darstellendes Phasendifferenzbild erzeugt wird,

   **dadurch gekennzeichnet,**
   **daß** von dem Phasendifferenzbild eine Kopie erzeugt wird, die gegenüber dem ursprünglichen Phasendifferenzbild so manipuliert wird, daß die Strukturmerkmale beseitigt oder zumindest unterdrückt werden, diese manipulierte Kopie des Phasendifferenzbildes mit dem ursprünglichen Phasendifferenzbild verknüpft wird und aus dieser Verknüpfung ein resultierendes Phasendifferenzbild entsteht.

2. Verfahren nach Anspruch 1, **dadurch gekennzeichnet,**
   **daß** die Verknüpfung der manipulierten Kopie des Phasendifferenzbildes mit dem ursprünglichen Phasendifferenzbild durch die Subtraktion der manipulierten Kopie des Phasendifferenzbildes vom ursprünglichen Phasendifferenzbild erfolgt.

3. Verfahren nach Anspruch 1 oder 2, **dadurch gekennzeichnet,**
   **daß** die Strukturmerkmale im zu manipulierenden Phasendifferenzbild durch eine Tiefpaßfilterung beseitigt werden.

**4.** Verfahren nach Anspruch 3, **dadurch gekennzeichnet,**
**daß** zur Tiefpaßfilterung des Phasendifferenzbildes vom Phasendifferenzbild das Sinus- und Cosinusbild berechnet wird, das Sinus- und Cosinusbild jeweils tiefpaßgefiltert wird, und aus dem gefilterten Sinus- und Cosinusbild wiederum das Phasendifferenzbild berechnet wird.

**5.** Verfahren nach Anspruch 4, **dadurch gekennzeichnet,**
**daß** zur Tiefpaßfilterung eine Filtermatrix verwendet wird, deren Größe so gewählt wird, daß das größte zu erwartende Strukturmerkmal ausreichend unterdrückt wird.

**6.** Verfahren nach Anspruch 4, **dadurch gekennzeichnet,**
**daß** zur Tiefpaßfilterung ein rekursiver Tiefpaßfilter verwendet wird.

**7.** Verfahren nach Anspruch 6, **dadurch gekennzeichnet,**
**daß** der rekursive Tiefpaßfilter mehrmals und ausgehend von unterschiedlichen Eckpunkten der zu filternden Bilder angewendet wird.

**8.** Verfahren nach Anspruch 1 bis 4, **dadurch gekennzeichnet,**
**daß** zur Manipulation bzw. Tiefpaßfilterung des Phasendifferenzbildes eine Fourier Transformation des zu manipulierenden Phasendifferenzbildes oder der daraus entwickelten Sinus- und Cosinusbilder vorgenommen wird, und die Manipulation bzw. Tiefpaßfilterung im Fourier Spektrum erfolgt.

**9.** Verfahren nach Anspruch 1 bis 8, **dadurch gekennzeichnet,**
**daß** das resultierende Phasendifferenzbild in einem zusätzlichen Auswerteschritt verstetigt wird.

**10.** Verfahren nach Anspruch 1 bis 9. **dadurch gekennzeichnet,**
**daß** im resultierenden Phasendifferenzbild die Nullwinkellage der Phasendifferenzen auf einen mittleren Grauwert verschoben wird und geringe Schwankungen um diese Nullpunktslage mit kontinuierlich ansteigenden oder absteigenden Grauwerten dargestellt werden.

**11.** Verfahren nach Anspruch 1 bis 10, **dadurch gekennzeichnet,**
**daß** die im resultierenden Phasendifferenzbild vorliegenden Grauwerte farbig dargestellt werden.

**Claims**

**1.** Method of determining structural features in test objects with diffuse scattering surfaces, in which

- the surface of the object is illuminated with coherent or structured light,
- the test object is observed with a camera,
- the test object is subjected to varying loads,
- the shifts or expansions of the surface of the object produced by varying loads are detected in the image sensor of the camera as intensity modulation produced by interferometry or by the structured light,
- the images produced on the image sensor are fed to an image processing system for further processing
- a phase difference image illustrating the shift or the stress-/expansion state of the object is produced from the images by the image processing system from the images produced,

**characterised in that**
from the phase difference image a copy is obtained and manipulated in relation to the original phase difference image so that the structural features are overcome or at least suppressed, this manipulated copy of the phase difference image is coupled with the original phase difference image and a resulting phase difference image is produced from this coupling.

**2.** Method according to Claim 1, **characterised in that** the coupling of the manipulated copy of the phase difference image with the original phase difference image is achieved by the subtraction of the manipulated copy of the phase difference image from the original phase difference image.

**3.** Method according to Claim 1 or 2, **characterised in that** the structural features in the phase difference image to be manipulated are suppressed by a low-pass filtering step.

**4.** Method according to Claim 3, **characterised in that** for the low-pass filtering of the phase difference image the sine and cosine images are calculated from the phase difference image, the sine and cosine images are each low-pass filtered, and the phase difference image is calculated again from the filtered sine and cosine images.

**5.** Method according to Claim 4, **characterised in that** for the low-pass filtering a filter matrix is used, of which the size is chosen so that the largest structural feature to be expected is sufficiently suppressed.

6. Method according to Claim 4, **characterised in that** a recursive low-pass filter is used for the low-pass filtering.

7. Method according to Claim 6, **characterised in that** the recursive low-pass filter is used several times and starting from different corner points of the images to be filtered.

8. Method according to Claim 1 to 4, **characterised in that** for the manipulation or low-pass filtering of the phase difference image a Fourier transformation of the phase difference image to be manipulated or of the sine and cosine images developed from it is undertaken and the manipulation or low-pass filtering takes place in the Fourier spectrum.

9. Method according to Claim 1 to 8, **characterised in that**
the resulting phase difference image is made continuous in an additional evaluating step.

10. Method according to Claim 1 to 9, **characterised in that**,
in the resulting phase difference image, the zero angle position of the phase differences is shifted on a mean grey scale and small variations around this zero point position are illustrated with continuously rising or falling grey scales.

11. Method according to Claim 1 to 10, **characterised in that**
grey scales present in the resulting phase difference image are illustrated in colour.

**Revendications**

1. Procédé pour déterminer des caractéristiques structurelles sur des objets à contrôler dont la surface est diffusante, dans lequel

- on éclaire la surface de l'objet avec une lumière cohérente ou structurée,
- on observe l'objet à contrôler à l'aide d'une caméra,
- on soumet l'objet à contrôler à différentes sollicitations,
- on enregistre les décalages ou allongements de la surface de l'objet engendrés par différentes sollicitations, sous forme de modulations d'intensité produites par interférométrie ou par la lumière structurée dans les images de l'objet à contrôler formées sur le capteur d'image de la caméra,
- on transmet à un système de traitement d'image, à des fins de traitement, les images produites sur le capteur d'image,

- à partir des images produites, le système de traitement d'image, produit une image à différences de phase qui représente le décalage ou l'état de contrainte/allongement de l'objet,
- **caractérisé en ce que**
- à partir de l'image à différences de phase, on produit une copie que l'on manipule par rapport à l'image à différences de phase d'origine afin d'éliminer ou tout au moins de limiter les caractéristiques de structure, on combine cette copie manipulée de l'image à différences de phase avec l'image à différences de phase d'origine et on forme à partir de cette combinaison une image à différences de phase résultante.

2. Procédé selon la revendication 1, **caractérisé en ce qu'**on réalise la combinaison de l'image à différences de phase manipulée avec l'image à différences de phase d'origine par soustraction de l'image à différences de phase manipulée de l'image à différences de phase d'origine.

3. Procédé selon la revendication 1 ou 2, **caractérisé en ce qu'**on élimine les caractéristiques de structure dans l'image à différences de phase à manipuler par un filtrage passe-bas.

4. Procédé selon la revendication 3, **caractérisé en ce que**, pour le filtrage passe-bas de l'image à différences de phase, on calcule les images sinus et cosinus à partir de l'image à différences de phase, on filtre respectivement l'image sinus et l'image cosinus et, à partir des images sinus et cosinus filtrées, on calcule de nouveau l'image à différences de phase.

5. Procédé selon la revendication 4, **caractérisé en ce qu'**on utilise pour le filtrage passe-bas une matrice de filtre dont la taille est choisie suffisamment grande pour éliminer la plus grande caractéristique de structure attendue.

6. Procédé selon la revendication 4, **caractérisé en ce qu'**on utilise pour le filtrage passe-bas, un filtre passe-bas récursif.

7. Procédé selon la revendication 6, **caractérisé en ce qu'**on utilise le filtre passe-bas récursif plusieurs fois et à partir de coins différents de l'image à filtrer.

8. Procédé selon les revendications 1 à 4, **caractérisé en ce que** pour la manipulation et le filtrage passe-bas de l'image à différences de phase on procède à une transformation de Fourier de l'image à différences de phase à manipuler et des images sinus et cosinus obtenues à partir de celle-ci et on réalise la manipulation ou le filtrage passe-bas dans le spectre de Fourier.

9. Procédé selon les revendications 1 à 8, **caractérisé en ce qu'**on stabilise l'image à différences de phase résultante au cours d'une étape de traitement supplémentaire.

10. Procédé selon les revendications 1 à 9, **caractérisé en ce que**, dans l'image à différences de phase résultante, on décale la position de l'angle zéro des différences de phase vers une valeur de gris moyenne et on représente de faibles- variations autour de cette position zéro par des valeurs de gris continûment croissantes ou décroissantes.

11. Procédé selon les revendications 1 à 10, **caractérisé en ce qu'**on affiche en couleur les valeurs de gris présentes dans l'image à différences de phase résultante.

Fig. 1

Fig. 2

Schnitt A

Schnitt B

Schnitt C

Fig. 3

Fig. 4

Fig. 5

Fig. 6

Fig. 7

Fig. 8

Fig. 9

Fig. 10

Fig. 11

Fig. 12